# EUROPEAN PATENT SPECIFICATION

(11) **EP 4 567 067 B1**
(45) Date of publication and mention of the grant of the patent: **09.12.2026**
(21) Application number: 24216660.1
(22) Date of filing: 29.11.2024
(51) Int. Cl.: C08L 23/12, C08K 3/013, C08K 3/016, C08K 7/14, C08K 3/32, C08K 5/00, C08K 5/3462, C08K 5/3492, C08K 5/52

(54) **FLAME-RETARDANT POLYPROPYLENE RESIN COMPOSITION WITH EXCELLENT MOISTURE HEAT RESISTANCE STABILITY AND ARTICLE MOLDED THEREFROM**
FLAMMHEMMENDE POLYPROPYLENHARZZUSAMMENSETZUNG MIT HERVORRAGENDER FEUCHTIGKEITSWÄRMEBESTÄNDIGKEITSSTABILITÄT UND DARAUS GEFORMTER ARTIKEL
COMPOSITION DE RÉSINE DE POLYPROPYLÈNE IGNIFUGE PRÉSENTANT UNE EXCELLENTE STABILITÉ À LA CHALEUR À L'HUMIDITÉ ET ARTICLE MOULÉ À PARTIR DE CELLE-CI

(30) Priority: 05.12.2023 KR 20230174197
(43) Date of publication of application: 11.06.2025
(73) Proprietor: Hanwha TotalEnergies Petrochemical Co., Ltd., Seosan-si, Chungcheongnam-do 31900 (KR)
(72) Inventor: HWANG, Yong Ki, 31900 Chungcheongnam-do (KR); KIM, Taeyoung, 31900 Chungcheongnam-do (KR); YOON, Seungkyun, 31900 Chungcheongnam-do (KR); CHUN, YongSung, 31900 Chungcheongnam-do (KR)
(74) Representative: HGF

(56) References cited:
- WO-A1-2022/110037
- WO-A1-2022/189647
- CN-A- 114 854 130
- DATABASE COMPENDEX [online] ENGINEERING INFORMATION, INC., NEW YORK, NY, US; 1 February 2021 (2021-02-01), YUAN Z ET AL: "Synergistic effect between piperazine pyrophosphate and melamine polyphosphate in flame retarded glass fiber reinforced polypropylene", XP002813276, Database accession no. E20210309774943
- YUAN Z ET AL: "Synergistic effect between piperazine pyrophosphate and melamine polyphosphate in flame retarded glass fiber reinforced polypropylene", POLYMER DEGRADATION AND STABILITY 20210201 ELSEVIER LTD GBR, vol. 184, 1 February 2021 (2021-02-01), DOI: 10.1016/J.POLYMDEGRADSTAB.2020.109477

## Description

### Technical Field

The present invention relates to a flame-retardant polypropylene resin composition with excellent moisture heat resistance stability and to an article molded therefrom. Specifically, the present invention relates to a polypropylene resin composition having excellent flame retardancy and excellent flame-retardant anti-release properties and to an article molded therefrom.

### Background Art of the Invention

A polypropylene resin, which is one of the general-purpose resins, is not only economical but also excellent in mechanical properties, moldability, and chemical resistance. Thus, it is widely used as a material for films, pipes, interior and exterior parts for automobiles, parts for electronic and household appliances, construction and industrial supplies, and the like.

Since such polypropylene resins are fundamentally flammable materials, attempts have been made to impart flame retardancy to the polypropylene resins.

For example, Korean Laid-open Patent Publication No. 10-2014-0100931 discloses a polyolefin resin composition using a phosphorus-based flame retardant, but it is silent on a flame-retardant polypropylene resin composition having excellent moisture heat resistance stability.

In addition, Korean Laid-open Patent Publication No. 10-2022-0052040 discloses a polyolefin resin composition containing a halogen-based flame retardant, antimony trioxide, and a high-molecular-weight ester compound, but it has a limitation in that toxic gases may be generated from the halogen-based flame retardant.

Accordingly, there has been a demand for the development of a polypropylene resin composition that has both excellent flame retardancy and moisture heat resistance stability.

### Prior Art Documents

### Patent Documents

Patent Document 1: Korean Laid-open Patent Publication No. 10-2014-0100931
Patent Document 2: Korean Laid-open Patent Publication No. 10-2022-0052040

### Disclosure of the Invention

### Technical Problem to Solve

An object of the present invention is to provide a flame-retardant polypropylene resin composition with both excellent processability and moisture heat resistance stability and to an article molded therefrom.

### Solution to the Problem

According to an embodiment of the present invention to accomplish the above object, there is provided a flame-retardant polypropylene resin composition that comprises, based on the total weight of components (A) to (C), (A) 30 to 55% by weight of a polypropylene-based resin selected from a propylene homopolymer, a propylene-based copolymer, and a propylene-based terpolymer; (B) 18 to 30% by weight of a flame retardant in which piperazine pyrophosphate and melamine polyphosphate are combined; and (C) 17 to 40% by weight of a reinforcing agent, wherein the polypropylene-based resin (A) comprises a first polypropylene-based resin (A1) and a second polypropylene-based resin (A2) having different melting indices, and the second polypropylene-based resin (A2) has a melt index of 1,350 to 1,450 g/10 minutes when measured at 230°C under a load of 2.16 kg in accordance with ASTM D1238.

In a specific embodiment of the present invention, the polypropylene-based resin (A) may be a propylene homopolymer.

In a specific embodiment of the present invention, the content of the second polypropylene-based resin (A2) in the flame-retardant polypropylene resin composition may be 5 to 20% by weight.

In a specific embodiment of the present invention, in the flame retardant (B), the content of phosphorus may be 18 to 22% by weight, and the content of nitrogen may be 17 to 22% by weight.

In a specific embodiment of the present invention, in the flame retardant (B), the content of melamine polyphosphate may be 20 to 40% by weight.

In a specific embodiment of the present invention, the reinforcing agent (C) may comprise at least one selected from the group consisting of glass fibers, glass beads, and glass flakes.

In a specific embodiment of the present invention, the flame-retardant polypropylene resin composition may further comprise, relative to 100 parts by weight of components (A) to (C), 0 to 5 parts by weight of (D) a compatibilizer; 0 to 1.0 part by weight of (E) an antioxidant; 0 to 1.0 part by weight of (F) a halogen absorbent; 0 to 1.0 part by weight of (G) an anti-drip agent; and 0 to 2 parts by weight of (H) a pigment.

In a specific embodiment of the present invention, the compatibilizer (D) may be a polypropylene resin onto which maleic anhydride is grafted.

In a specific embodiment of the present invention, the antioxidant (E) may comprise at least one selected from the group consisting of pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, 2',3-bis[[3-[3,5-di-t-butyl-4-hydroxyphenyl]propionyl]]propionohydrazide, and tris(2,4-di-t-butylphenyl)phosphite.

In a specific embodiment of the present invention, the halogen absorbent (F) may comprise at least one selected from the group consisting of calcium stearate and hydrotalcite (Mg₁₋ₓAlₓ(OH)₂(CO₃)_{x/2}·mH₂O).

In a specific embodiment of the present invention, the anti-drip agent (G) may comprise at least one fluorine-based anti-drip agent selected from the group consisting of polytetrafluoroethylene, polyvinylidene fluoride, polyhexafluoropropylene, sodium perfluoromethanesulfonate, potassium perfluoro-n-butanesulfonate, potassium perfluoro-t-butanesulfonate, sodium perfluorooctanesulfonate, and calcium perfluoro-2-ethylhexanesulfonate, and the anti-drip agent may be in the form of a master batch dispersed in a polypropylene-based resin.

In a specific embodiment of the present invention, the pigment (H) may comprise at least one inorganic pigment selected from the group consisting of carbon black, aluminum flake, aluminum powder, aluminum foil, zinc powder, bronze powder, pearl mica, titanium white, zinc oxide, zinc sulfide, chrome yellow, barium yellow, ultramarine, cobalt blue, and cobalt green; at least one organic pigment selected from the group consisting of Watchung Red, Permanent Red, Palladium Red, Benzidine Yellow, and Phthalocyanine Green; or a mixture thereof, and the pigment may be in the form of a master batch dispersed in a low-density polyethylene-based resin.

In a specific embodiment of the present invention, the flame-retardant polypropylene resin composition may further comprise at least one additive selected from the group consisting of a neutralizer, a slip agent, an anti-blocking agent, a filler, a weathering stabilizer, an antistatic agent, a lubricant, a nucleating agent, and a dye.

According to another embodiment of the present invention, there is provided a flame-retardant polypropylene resin article molded from the flame-retardant polypropylene resin composition.

In a specific embodiment of the present invention, the flame-retardant polypropylene resin article, based on a thickness of 1.5 mm, may satisfy the V0 standard when measured in accordance with the UL94 vertical test method.

In a specific embodiment of the present invention, the flame-retardant polypropylene resin article may satisfy the conditions of 1,000 hours or longer in a flame-retardant release test at a temperature of 85°C and a relative humidity of 85%.

In a specific embodiment of the present invention, the flame-retardant polypropylene resin article may be a home appliance part or an automobile part.

### Effects of the Invention

Since the polypropylene resin composition according to an embodiment of the present invention has both excellent moisture heat resistance stability and flame retardancy, it can be advantageously used in applications requiring weather resistance, light resistance, and mold releasability.

### Brief Description of the Drawings

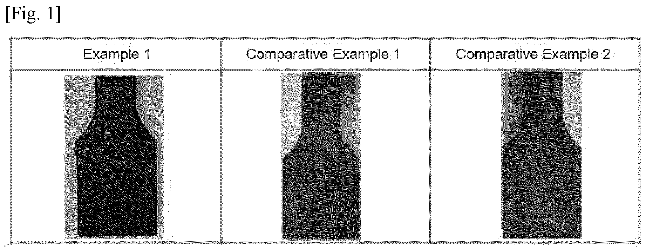

Fig. 1 is a photograph showing the results of flame-retardant release test of the compositions of Example 1 and Comparative Examples 1 and 2.

### Detailed Description for Carrying out the Invention

Hereinafter, the present invention will be described in more detail.

The flame-retardant polypropylene resin composition according to an embodiment of the present invention comprises, based on the total weight of components (A) to (C), (A) 30 to 55% by weight of a polypropylene-based resin selected from a propylene homopolymer, a propylene-based copolymer, and a propylene-based terpolymer; (B) 18 to 30% by weight of a flame retardant in which piperazine pyrophosphate and melamine polyphosphate are combined; and (C) 17 to 40% by weight of a reinforcing agent.

### (A) Polypropylene-based resin

The flame-retardant polypropylene resin composition according to an embodiment of the present invention comprises a polypropylene-based resin (A). Specifically, the polypropylene-based resin (A) may be selected from a propylene homopolymer, a propylene-based copolymer, and a propylene-based terpolymer.

The propylene homopolymer may be a polymer obtained by polymerization of a propylene monomer substantially alone.

There is no particular limitation to the method of preparing the propylene homopolymer. Any method of preparing a propylene homopolymer known in the art to which the present invention pertains may be used as it is or appropriately modified. For example, a bulk polymerization method, a solution polymerization method, a slurry polymerization method, a gas phase polymerization method, or the like may be used. Further, either a batch type or a continuous type is possible.

In a specific embodiment of the present invention, the polypropylene-based resin (A) may be a propylene homopolymer.

The propylene-based copolymer may be a propylene-α-olefin random copolymer or an ethylene-propylene block copolymer, but it is not particularly limited thereto.

The propylene-α-olefin random copolymer may be a random copolymer of propylene and ethylene or propylene and an α-olefin having 4 to 8 carbon atoms.

There is no particular limitation to the method of preparing the propylene-α-olefin random copolymer. Any method of preparing a propylene-α-olefin random copolymer known in the art to which the present invention pertains may be used as it is or appropriately modified. For example, a bulk polymerization method, a solution polymerization method, a slurry polymerization method, a gas-phase polymerization method, or the like may be used. Further, either a batch type or a continuous type is possible.

The ethylene-propylene block copolymer may be obtained by polymerization of a propylene homopolymer or a propylene-α-olefin random copolymer as a matrix component with an ethylene-propylene rubber copolymer component in stages in reactors.

There is no particular limitation to the method of preparing the ethylene-propylene block copolymer. Any method of preparing an ethylene-propylene block copolymer known in the art to which the present invention pertains may be used as it is or appropriately modified. For example, the ethylene-propylene block copolymer may be prepared by a polymerization method known to those skilled in the art using a commercialized process such as LyondellBasell's Spherizone process, Mitsui's Hypol process, or Grace's Unipol process.

The propylene-based terpolymer may be a terpolymer of propylene, ethylene, and an α-olefin having 4 to 8 carbon atoms. The propylene-based terpolymer may be prepared using the preparation process used in the method for preparing the propylene-based copolymer described above.

In a specific embodiment of the present invention, the polypropylene-based resin (A) comprises a first polypropylene-based resin (A1) and a second polypropylene-based resin (A2) having different melting indices, and the second polypropylene-based resin (A2) has a melt index of 1,350 to 1,450 g/10 minutes when measured at 230°C under a load of 2.16 kg in accordance with ASTM D1238.

The flame-retardant polypropylene resin composition according to an embodiment of the present invention comprises 30 to 55% by weight of the polypropylene-based resin (A) based on the total weight of components (A) to (C). If the content of the polypropylene-based resin (A) is less than 30% by weight, the mechanical properties of a molded article may be deteriorated. If the content exceeds 55% by weight, it is difficult to achieve sufficient flame retardancy.

In a specific embodiment of the present invention, the content of the second polypropylene-based resin (A2) in the flame-retardant polypropylene resin composition may be 5 to 20% by weight. When the content of the second polypropylene-based resin (A2) satisfies the above range, the flame-retardant polypropylene resin composition may exhibit excellent processability.

### (B) Flame retardant

The flame-retardant polypropylene resin composition according to an embodiment of the present invention comprises a flame retardant (B). Here, the flame retardant (B) is a flame retardant in which piperazine pyrophosphate and melamine polyphosphate are combined.

In a specific embodiment of the present invention, in the flame retardant (B), the content of phosphorus may be 18 to 22% by weight, and the content of nitrogen may be 17 to 22% by weight. As the contents of phosphorus and nitrogen in the flame retardant each satisfy the above range, it is excellent in terms of char formation and flame retardancy, and the blooming phenomenon of the flame retardant would not occur in a high-temperature and humid environment.

In addition, in the flame retardant (B), the content of melamine polyphosphate is 20 to 40% by weight. If the content of melamine polyphosphate in the flame retardant (B) exceeds the above range, while the flame retardancy increases, the thermal resistance deteriorates during product processing, which may cause gas generation and blooming of the flame retardant. If the content of melamine polyphosphate is less than the above range, while thermal resistance increases, flame retardancy may deteriorate.

The flame-retardant polypropylene resin composition according to an embodiment of the present invention comprises 18 to 30% by weight of the flame retardant (B) based on the total weight of components (A) to (C). If the content of the flame retardant (B) is less than 18% by weight, the flame retardancy of the resin composition may be insufficient. On the other hand, if the content of the flame retardant (B) exceeds 30% by weight, mechanical properties or processability of the resin composition may be deteriorated.

### (C) Reinforcing agent

The flame-retardant polypropylene resin composition according to an embodiment of the present invention comprises a reinforcing agent (C).

In a specific embodiment of the present invention, the reinforcing agent (C) may comprise at least one selected from the group consisting of glass fibers, glass beads, and glass flakes. As long as the reinforcing agent is commonly used in polypropylene resin compositions, its shape and size are not particularly limited.

The flame-retardant polypropylene resin composition according to an embodiment of the present invention comprises 17 to 40% by weight of the reinforcing agent (C) based on the total weight of components (A) to (C). When the content of the reinforcing agent (C) satisfies the above range, the flame-retardant polypropylene resin composition may have excellent mechanical properties and processability.

In a specific embodiment of the present invention, the flame-retardant polypropylene resin composition according to an embodiment of the present invention may further comprise, relative to 100 parts by weight of components (A) to (C), 0 to 5 parts by weight of (D) a compatibilizer; 0 to 1.0 part by weight of (E) an antioxidant; 0 to 1.0 part by weight of (F) a halogen absorbent; 0 to 1.0 part by weight of (G) an anti-drip agent; and 0 to 2 parts by weight of (H) a pigment.

### (D) Compatibilizer

The flame-retardant polypropylene resin composition according to an embodiment of the present invention may comprise a compatibilizer (D).

In a specific embodiment of the present invention, the compatibilizer (D) may be a polypropylene resin onto which maleic anhydride is grafted. As long as the compatibilizer is commonly used in polypropylene resin compositions, its composition and properties are not particularly limited.

The flame-retardant polypropylene resin composition according to an embodiment of the present invention may comprise the compatibilizer (D) in an amount of 0 to 5 parts by weight relative to 100 parts by weight of components (A) to (C). When the compatibilizer (D) is employed within the above content range, the compatibility of the polypropylene-based resin (A), flame retardant (B), and reinforcing agent (C) may be enhanced.

### (E) Antioxidant

The flame-retardant polypropylene resin composition according to an embodiment of the present invention may comprise an antioxidant (E).

In a specific embodiment of the present invention, the antioxidant (E) may comprise at least one selected from the group consisting of pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, 2',3-bis[[3-[3,5-di-t-butyl-4-hydroxyphenyl]propionyl]]propionohydrazide, and tris(2,4-di-t-butylphenyl)phosphite.

The flame-retardant polypropylene resin composition according to an embodiment of the present invention may comprise the antioxidant (E) in an amount of 0 to 1.0 part by weight relative to 100 parts by weight of components (A) to (C). When the antioxidant (E) is employed within the above content range, the long-term thermal resistance of the resin composition may be enhanced.

### (F) Halogen absorbent

The flame-retardant polypropylene resin composition according to an embodiment of the present invention may comprise a halogen absorbent (F).

In a specific embodiment of the present invention, the halogen absorbent (F) may comprise at least one selected from the group consisting of calcium stearate and hydrotalcite (Mg₁₋ₓAlₓ(OH)₂(CO₃)_{x/2}·mH₂O).

The flame-retardant polypropylene resin composition according to an embodiment of the present invention may comprise the halogen absorbent (F) in an amount of 0 to 1.0 part by weight relative to 100 parts by weight of components (A) to (C). When the halogen absorbent (F) is employed within the above content range, residual components of the catalyst used in the preparation of the polypropylene-based resin (A) may be effectively removed.

### (G) Anti-drip agent

The flame-retardant polypropylene resin composition according to an embodiment of the present invention may comprise an anti-drip agent (G). The anti-drip agent (G) serves to prevent dripping when the resin composition is burned.

In a specific embodiment of the present invention, the anti-drip agent (G) may comprise at least one fluorine-based anti-drip agent selected from the group consisting of polytetrafluoroethylene, polyvinylidene fluoride, polyhexafluoropropylene, sodium perfluoromethanesulfonate, potassium perfluoro-n-butanesulfonate, potassium perfluoro-t-butanesulfonate, sodium perfluorooctanesulfonate, and calcium perfluoro-2-ethylhexanesulfonate.

Preferably, the anti-drip agent (G) may be in the form of a master batch dispersed in a polypropylene-based resin.

The flame-retardant polypropylene resin composition according to an embodiment of the present invention may comprise the anti-drip agent (G) in an amount of 0 to 1.0 part by weight relative to 100 parts by weight of components (A) to (C). When the anti-drip agent (G) is employed within the above content range, an appropriate anti-drip effect may be expected.

### (H) Pigment

The flame-retardant polypropylene resin composition according to an embodiment of the present invention may comprise a pigment (H).

In a specific embodiment of the present invention, the pigment (H) may comprise at least one inorganic pigment selected from the group consisting of carbon black, aluminum flake, aluminum powder, aluminum foil, zinc powder, bronze powder, pearl mica, titanium white, zinc oxide, zinc sulfide, chrome yellow, barium yellow, ultramarine, cobalt blue, and cobalt green; at least one organic pigment selected from the group consisting of Watchung Red, Permanent Red, Palladium Red, Benzidine Yellow, and Phthalocyanine Green; or a mixture thereof.

Preferably, the pigment (H) may be in the form of a master batch dispersed in a low-density polyethylene-based resin.

The flame-retardant polypropylene resin composition according to an embodiment of the present invention may comprise the pigment (H) in an amount of 0 to 2 parts by weight relative to 100 parts by weight of components (A) to (C). When the pigment (H) is employed within the above content range, a desired coloring effect may be achieved without impairing other properties of the resin composition.

### (I) Additive

The flame-retardant polypropylene resin composition according to an embodiment of the present invention may further comprise conventional additives within a range that does not depart from the scope of the present invention. For example, the flame-retardant polypropylene resin composition according to an embodiment of the present invention may further comprise at least one additive selected from the group consisting of a neutralizer, a slip agent, an anti-blocking agent, a filler, a weathering stabilizer, an antistatic agent, a lubricant, a nucleating agent, and a dye.

There is no particular limitation to the method of preparing the flame-retardant polypropylene resin composition according to an embodiment of the present invention. Any method of preparing a polypropylene resin composition known in the art to which the present invention pertains may be used as it is or as appropriately modified. The respective resin components and compounds described above may be selected and mixed according to a desired order without any particular limitations thereto.

As a specific example, the resins and compounds described above in predetermined amounts are blended for 1 to 2 hours in a blender such as a Henschel mixer, a kneader, a roll, and a Banbury mixer. They are then melted and compounded in a single- or twin-screw extruder at a temperature of 160 to 230°C, thereby preparing a polypropylene resin composition in the form of pellets.

According to another embodiment of the present invention, there is provided a flame-retardant polypropylene resin article molded from the flame-retardant polypropylene resin composition.

There is no particular limitation to the method of preparing a molded article from the flame-retardant polypropylene resin composition according to an embodiment of the present invention. Any method known in the technical field to which the present invention pertains may be used. For example, the flame-retardant polypropylene resin composition according to an embodiment of the present invention may be molded by a conventional method such as injection molding, extrusion molding, casting molding, or the like to prepare a polypropylene resin article.

In a specific embodiment of the present invention, the flame-retardant polypropylene resin article, based on a thickness of 1.5 mm, may satisfy the V0 standard when measured in accordance with the UL94 vertical test method.

In a specific embodiment of the present invention, the flame-retardant polypropylene resin article may satisfy the conditions of 1,000 hours or longer in a flame-retardant release test at a temperature of 85°C and a relative humidity of 85%.

In a specific embodiment of the present invention, the flame-retardant polypropylene resin article may be a home appliance part or an automobile part.

### Example

Hereinafter, the present invention is explained in detail by the following examples. However, the following examples are intended to further illustrate the present invention. The scope of the present invention is not limited thereto only.

The raw materials used in the Examples and the Comparative Examples are as follows.
A1: Propylene homopolymer resin (Hanwha TotalEnergies, HJ700; melt index of 30 g/10 min.)
A2: Propylene homopolymer resin (Hanwha TotalEnergies, HR1004; melt index of 1,400 g/10 min.)
B1: Flame retardant (phosphorus/nitrogen-based flame retardant in which piperazine pyrophosphate and melamine polyphosphate are mixed at a weight ratio of 7:3)
B2: Flame retardant (phosphorus/nitrogen-based flame retardant in which diphosphoric acid, piperazine, and melamine polyphosphate are mixed at a weight ratio of 27.5:27.5:45)
B3: Flame retardant (phosphorus-based flame retardant; Exolite AP422)
B4: Flame retardant (phosphorus-based flame retardant; Exolite AP462)
C1: Reinforcing agent (glass fiber)
D1: Compatibilizer (polypropylene resin grafted with 1% by weight of maleic anhydride)
E1: Antioxidant (pentaerythritol tetrakis(3-(3,5-di-t-butyl-4-hydroxyphenyl)propionate))
E2: Antioxidant (tris(2,4-di-t-butylphenyl)phosphite)
E3: Antioxidant (2',3-bis[[3-[3,5-di-t-butyl-4-hydroxyphenyl]propionyl]]propionohydrazide)
F1: Halogen absorbent (calcium stearate)
G1: Anti-drip agent (TEFLON MPP-5050; a masterbatch of polypropylene and polytetrafluoroethylene (PTFE) at a weight ratio of 5:5)
H1: Pigment (a masterbatch of low-density polyethylene and carbon black at a weight ratio of 55:45)

### Preparation Example

Resins and compounds of the type and content as shown in Table 1 below were melted and blended in a twin-screw extruder at a temperature of approximately 180 to 210°C and then pelletized. Each content of components A to C represents percent by weight based on the total weight, and each content of components D to H represents party by weight relative to 100 parts by weight of components A to C.

**[Table 1]**

| | Example 1 | Comparative Example 1 | Comparative Example 2 | Comparative Example 3 |
|---|---|---|---|---|
| A1 | 33.9 | 33.9 | 32.9 | 32.9 |
| A2 | 12.4 | 12.4 | 12.4 | 12.4 |
| B1 | 22.7 | - | - | - |
| B2 | - | 22.7 | - | - |
| B3 | - | - | 23.7 | - |
| B4 | - | - | - | 23.7 |
| C1 | 31.0 | 31.0 | 31.0 | 31.0 |
| Total | 100 | 100 | 100 | 100 |
| D1 | 2.1 | 2.1 | 2.1 | 2.1 |
| E1 | 0.1 | 0.1 | 0.1 | 0.1 |
| E2 | 0.1 | 0.1 | 0.1 | 0.1 |
| E3 | 0.15 | 0.15 | 0.15 | 0.15 |
| F1 | 0.1 | 0.1 | 0.1 | 0.1 |
| G1 | 0.2 | 0.2 | 0.2 | 0.2 |
| H1 | 0.5 | 0.5 | 0.5 | 0.5 |

### Test Example

The polypropylene resin compositions and the specimens prepared therefrom in the Examples and Comparative Examples were each tested by the following methods. The results are shown in Table 2 below and Fig. 1.

### (1) Flame retardancy

The flame retardancy of an injection molded specimen having a thickness of 1.5 mm was measured in accordance with the UL94 vertical test method.

### (2) Flame retardant anti-release properties

A specimen according to the ISO tensile standard 527 TYPE A having a size of 10 mm × 110 mm × 4 mm was prepared. It was kept at a temperature of 85°C and a relative humidity of 85% for 1,000 hours. It was then visually observed whether the flame retardant had migrated to the specimen surface.

**[Table 2]**

| | Example 1 | Comparative Example 1 | Comparative Example 2 | Comparative Example 3 |
|---|---|---|---|---|
| Flame retardancy (1.5 mm, V0) | Pass | Pass | Pass | Pass |
| Flame retardant anti-release properties | Good | Poor | Poor | Poor |

As can be seen from Tables 1 and 2 above, the polypropylene resin composition of the Example, falling within the scope of the present invention, was excellent in flame retardancy and flame-retardant anti-release properties.

In contrast, the polypropylene resin compositions comprising a flame retardant not covered by the present invention were poor in flame retardancy and flame-retardant anti-release properties.

Accordingly, the polypropylene resin composition, falling within the scope of the present invention, has excellent flame retardancy and flame-retardant anti-release properties, it can be advantageously used in home appliance parts and automobile parts.

## Claims

1. A flame-retardant polypropylene resin composition, which comprises, based on the total weight of components (A) to (C), (A) 30 to 55% by weight of a polypropylene-based resin selected from a propylene homopolymer, a propylene-based copolymer, and a propylene-based terpolymer; (B) 18 to 30% by weight of a flame retardant in which piperazine pyrophosphate and melamine polyphosphate are combined, and the content of melamine polyphosphate in the flame retardant (B) is 20 to 40% by weight; and (C) 17 to 40% by weight of a reinforcing agent, the polypropylene-based resin (A) comprises a first polypropylene-based resin (A1) and a second polypropylene-based resin (A2) having different melting indices, and the second polypropylene-based resin (A2) has a melt index of 1,350 to 1,450 g/10 minutes when measured at 230°C under a load of 2.16 kg according to ASTM D1238.

2. The flame-retardant polypropylene resin composition of claim 1, wherein the polypropylene-based resin (A) is a propylene homopolymer.

3. The flame-retardant polypropylene resin composition of claim 1 or 2, wherein the content of the second polypropylene-based resin (A2) in the flame-retardant polypropylene resin composition is 5 to 20% by weight.

4. The flame-retardant polypropylene resin composition of any one of claims 1 to 3, wherein, in the flame retardant (B), the content of phosphorus is 18 to 22% by weight, and the content of nitrogen is 17 to 22% by weight.

5. The flame-retardant polypropylene resin composition of any one of claims 1 to 4, wherein the reinforcing agent (C) comprises at least one selected from the group consisting of glass fibers, glass beads, and glass flakes.

6. The flame-retardant polypropylene resin composition of any one of claims 1 to 5, which further comprises, relative to 100 parts by weight of components (A) to (C), 0 to 5 parts by weight of (D) a compatibilizer; 0 to 1.0 part by weight of (E) an antioxidant; 0 to 1.0 part by weight of (F) a halogen absorbent; 0 to 1.0 part by weight of (G) an anti-drip agent; and 0 to 2 parts by weight of (H) a pigment.

7. The flame-retardant polypropylene resin composition of claim 6, wherein the compatibilizer (D) is a polypropylene resin onto which maleic anhydride is grafted.

8. The flame-retardant polypropylene resin composition of claim 6 or 7, wherein the antioxidant (E) comprises at least one selected from the group consisting of pentaerythritol tetrakis(3-(3,5-di-t-butyl-4-hydroxyphenyl)propionate), 1,3,5-trimethyl-2,4,6-tris(3,5-di-t-butyl-4-hydroxybenzyl)benzene, 2',3-bis[[3-[3,5-di-t-butyl-4-hydroxyphenyl]propionyl]]propionohydrazide, and tris(2,4-di-t-butylphenyl)phosphite.

9. The flame-retardant polypropylene resin composition of any one of claims 6 to 8, wherein the halogen absorbent (F) comprises at least one selected from the group consisting of calcium stearate and hydrotalcite (Mg₁₋ₓAlₓ(OH)₂(CO₃)_{x/2}·mH₂O).

10. The flame-retardant polypropylene resin composition of any one of claims 6 to 9, wherein the anti-drip agent (G) comprises at least one fluorine-based anti-drip agent selected from the group consisting of polytetrafluoroethylene, polyvinylidene fluoride, polyhexafluoropropylene, sodium perfluoromethanesulfonate, potassium perfluoro-n-butane sulfonate, potassium perfluoro-t-butanesulfonate, sodium perfluorooctanesulfonate, and calcium perfluoro-2-ethylhexanesulfonate, and the anti-drip agent (G) is in the form of a master batch dispersed in a polypropylene-based resin.

11. The flame-retardant polypropylene resin composition of any one of claims 6 to 10, wherein the pigment (H) comprises at least one inorganic pigment selected from the group consisting of carbon black, aluminum flake, aluminum powder, aluminum foil, zinc powder, bronze powder, pearl mica, titanium white, zinc oxide, zinc sulfide, chrome yellow, barium yellow, ultramarine, cobalt blue, and cobalt green; at least one organic pigment selected from the group consisting of Watchung Red, Permanent Red, Palladium Red, Benzidine Yellow, and Phthalocyanine Green; or a mixture thereof, and the pigment (H) is in the form of a master batch dispersed in a low-density polyethylene-based resin.

12. The flame-retardant polypropylene resin composition of any one of claims 1 to 11, which further comprises at least one additive selected from the group consisting of a neutralizer, a slip agent, an anti-blocking agent, a filler, a weathering stabilizer, an antistatic agent, a lubricant, a nucleating agent, and a dye.

13. A flame-retardant polypropylene resin article, which is molded from the flame-retardant polypropylene resin composition according to any one of claims 1 to 12.

14. The flame-retardant polypropylene resin article of claim 13, which, based on a thickness of 1.5 mm, satisfies the V0 standard when measured in accordance with the UL94 vertical test method, or
which satisfies the conditions of 1,000 hours or longer in a flame-retardant release test at a temperature of 85°C and a relative humidity of 85%.

15. The flame-retardant polypropylene resin article of claim 13 or 14, which is a home appliance part or an automobile part.

## Patentansprüche

1. Flammhemmende Polypropylenharzzusammensetzung, die, basierend auf dem Gesamtgewicht der Komponenten (A) bis (C), (A) 30 bis 55 Gewichts-% eines Harzes auf Polypropylenbasis ausgewählt aus einem Propylenhomopolymer, einem Copolymer auf Propylenbasis und einem Terpolymer auf Propylenbasis; (B) 18 bis 30 Gewichts-% eines Flammhemmers, in dem Piperazinpyrophosphat und Melaminpolyphosphat kombiniert sind und der Gehalt an Melaminpolyphosphat in dem Flammhemmer (B) 20 bis 40 Gewichts-% ist; und (C) 17 bis 40 Gewichts-% eines Verstärkungsmittels umfasst, wobei das Harz auf Polypropylenbasis (A) ein erstes Harz auf Polypropylenbasis (A1) und ein zweites Harz auf Polypropylenbasis (A2) mit unterschiedlichen Schmelzindizes umfasst und das zweite Harz auf Polypropylenbasis (A2) einen Schmelzindex von 1.350 bis 1.450 g/10 Minuten aufweist, wenn gemessen bei 230 °C unter einer Last von 2,16 kg gemäß ASTM D1238.

2. Flammhemmende Polypropylenharzzusammensetzung nach Anspruch 1, wobei das Harz auf Polypropylenbasis (A) ein Propylenhomopolymer ist.

3. Flammhemmende Polypropylenharzzusammensetzung nach Anspruch 1 oder 2, wobei der Gehalt des zweiten Harzes auf Polypropylenbasis (A2) in der flammhemmenden Polypropylenharzzusammensetzung 5 bis 20 Gewichts-% ist.

4. Flammhemmende Polypropylenharzzusammensetzung nach einem der Ansprüche 1 bis 3, wobei in dem Flammhemmer (B) der Gehalt an Phosphor 18 bis 22 Gewichts-% ist und der Gehalt an Stickstoff 17 bis 22 Gewichts-% ist.

5. Flammhemmende Polypropylenharzzusammensetzung nach einem der Ansprüche 1 bis 4, wobei das Verstärkungsmittel (C) zumindest eines ausgewählt aus der Gruppe bestehend aus Glasfasern, Glaskügelchen und Glasflocken umfasst.

6. Flammhemmende Polypropylenharzzusammensetzung nach einem der Ansprüche 1 bis 5, die ferner, relativ zu 100 Gewichtsteilen der Komponenten (A) bis (C), 0 bis 5 Gewichtsteile (D) eines Kompatibilisierungsmittels; 0 bis 1,0 Gewichtsteile (E) eines Antioxidans; 0 bis 1,0 Gewichtsteile (F) eines Halogenabsorptionsmittels; 0 bis 1,0 Gewichtsteile (G) eines Antitropfmittels; und 0 bis 2 Gewichtsteile (H) eines Pigments umfasst.

7. Flammhemmende Polypropylenharzzusammensetzung nach Anspruch 6, wobei das Kompatibilisierungsmittel (D) ein Polypropylenharz ist, auf das Maleinsäureanhydrid aufgepfropft ist.

8. Flammhemmende Polypropylenharzzusammensetzung nach Anspruch 6 oder 7, wobei das Antioxidans (E) zumindest eines ausgewählt aus der Gruppe bestehend aus Pentaerythritol-tetrakis(3-(3,5-di-t-butyl-4-hydroxyphenyl)propionat), 1,3,5-Trimethyl-2,4,6-tris(3,5-di-t-butyl-4-hydroxybenzyl)benzol, 2',3-bis[[3-[3,5-di-t-Butyl-4-hydroxyphenyl]propionyl]]propionohydrazid und tris(2,4-di-t-Butylphenyl)phosphit umfasst.

9. Flammhemmende Polypropylenharzzusammensetzung nach einem der Ansprüche 6 bis 8, wobei das Halogenabsorptionsmittel (F) zumindest eines ausgewählt aus der Gruppe bestehend aus Calciumstearat und Hydrotalcit (Mg₁₋ₓAlₓ(OH)₂(CO₃)_{x/2}·mH₂O) umfasst.

10. Flammhemmende Polypropylenharzzusammensetzung nach einem der Ansprüche 6 bis 9, wobei das Antitropfmittel (G) zumindest ein Antitropfmittel auf Fluorbasis ausgewählt aus der Gruppe bestehend aus Polytetrafluorethylen, Polyvinylidenfluorid, Polyhexafluorpropylen, Natriumperfluormethansulfonat, Kaliumperfluoro-n-butansulfonat, Kaliumperfluor-t-butansulfonat, Natriumperfluoroctansulfonat und Calciumperfluor-2-ethylhexansulfonat umfasst und das Antitropfmittel (G) in der Form eines Masterbatches ist, der in einem Harz auf Polypropylenbasis dispergiert ist.

11. Flammhemmende Polypropylenharzzusammensetzung nach einem der Ansprüche 6 bis 10, wobei das Pigment (H) zumindest ein anorganisches Pigment ausgewählt aus der Gruppe bestehend aus Ruß, Aluminiumflocke, Aluminiumpulver, Aluminiumfolie, Zinkpulver, Bronzepulver, Perlglimmer, Titanweiß, Zinkoxid, Zinksulfid, Chromgelb, Bariumgelb, Ultramarin, Kobaltblau und Kobaltgrün; zumindest ein organisches Pigment ausgewählt aus der Gruppe bestehend aus Watchung-Rot, Permanentrot, Palladiumrot, Benzidingelb und Phthalocyaningrün; oder ein Gemisch davon umfasst und das Pigment (H) in der Form eines Masterbatches ist, der in einem Harz auf Polyethylenbasis mit niedriger Dichte dispergiert ist.

12. Flammhemmende Polypropylenharzzusammensetzung nach einem der Ansprüche 1 bis 11, die ferner zumindest ein Additiv ausgewählt aus der Gruppe bestehend aus einem Neutralisator, einem Gleitmittel, einem Antiblockiermittel, einem Füller, einem Witterungsstabilisator, einem Antistatikmittel, einem Schmiermittel, einem Nukleierungsmittel und einem Farbstoff umfasst.

13. Flammhemmender Polypropylenharzartikel, der aus der flammhemmenden Polypropylenharzzusammensetzung nach einem der Ansprüche 1 bis 12 geformt ist.

14. Flammhemmender Polypropylenharzartikel nach Anspruch 13, der, basierend auf einer Dicke von 1,5 mm, den V0-Standard erfüllt, wenn gemäß dem vertikalen UL94-Testverfahren gemessen, oder
der die Bedingungen von 1.000 Stunden oder länger in einem flammhemmenden Freisetzungstest bei einer Temperatur von 85 °C und einer relativen Luftfeuchtigkeit von 85 % erfüllt.

15. Flammhemmender Polypropylenharzartikel nach Anspruch 13 oder 14, der ein Haushaltsgeräteteil oder ein Automobilteil ist.

## Revendications

1. Composition de résine de polypropylène ignifuge, qui comprend, sur la base du poids total des composants (A) à (C), (A) de 30 à 55 % en poids d'une résine à base de polypropylène choisie parmi un homopolymère de propylène, un copolymère à base de propylène et un terpolymère à base de propylène ; (B) de 18 à 30 % en poids d'un ignifuge dans lequel le pyrophosphate de pipérazine et le polyphosphate de mélamine sont combinés, et la teneur en polyphosphate de mélamine dans l'ignifuge (B) est de 20 à 40 % en poids ; et (C) de 17 à 40 % en poids d'un agent de renforcement, la résine à base de polypropylène (A) comprend une première résine à base de polypropylène (A1) et une seconde résine à base de polypropylène (A2) ayant des indices de fusion différents, et la seconde résine à base de polypropylène (A2) a un indice de fusion de 1 350 à 1 450 g/10 minutes lorsqu'elle est mesurée à 230 °C sous une charge de 2,16 kg selon la norme ASTM D1238.

2. Composition de résine de polypropylène ignifuge de la revendication 1, dans laquelle la résine à base de polypropylène (A) est un homopolymère de propylène.

3. Composition de résine de polypropylène ignifuge selon l'une des revendications 1 ou 2, dans laquelle la teneur en seconde résine à base de polypropylène (A2) dans la composition de résine de polypropylène ignifuge est de 5 à 20 % en poids.

4. Composition de résine de polypropylène ignifuge selon l'une quelconque des revendications 1 à 3, dans laquelle dans l'ignifuge (B), la teneur en phosphore est de 18 à 22 % en poids et la teneur en azote est de 17 à 22 % en poids.

5. Composition de résine de polypropylène ignifuge selon l'une quelconque des revendications 1 à 4, dans laquelle l'agent de renforcement (C) comprend au moins un élément choisi dans le groupe composé de fibres de verre, de billes de verre et de flocons de verre.

6. Composition de résine de polypropylène ignifuge selon l'une quelconque des revendications 1 à 5, qui comprend en outre, par rapport à 100 parties en poids des composants (A) à (C), 0 à 5 parties en poids de (D) un agent de compatibilité ; 0 à 1,0 partie en poids de (E) un antioxydant ; 0 à 1,0 partie en poids de (F) un absorbant d'halogène ; 0 à 1,0 partie en poids de (G) un agent anti-goutte ; et 0 à 2 parties en poids de (H) un pigment.

7. Composition de résine de polypropylène ignifuge de la revendication 6, dans laquelle l'agent de compatibilité (D) est une résine de polypropylène sur laquelle de l'anhydride maléique est greffé.

8. Composition de résine de polypropylène ignifuge de la revendication 6 ou 7, dans laquelle l'antioxydant (E) comprend au moins l'un choisi dans le groupe constitué du pentaérythritol tétrakis(3-(3,5-di-t-butyl-4-hydroxyphényl)propionate), du 1,3,5-triméthyl-2,4,6-tris (3,5-di-t-butyl-4-hydroxybenzyl)benzène, du 2',3-bis[[3-[3,5-di-t-butyl-4-hydroxyphényl]propionyl]]propionohydrazide et du tris(2,4-di-t-butylphényl)phosphite.

9. Composition de résine de polypropylène ignifuge selon l'une quelconque des revendications 6 à 8, dans laquelle l'absorbant d'halogène (F) comprend au moins l'un choisi dans le groupe constitué du stéarate de calcium et de l'hydrotalcite (Mg₁₋ₓA1ₓ(OH)₂(CO₃)_{x/2}·mH₂O).

10. Composition de résine de polypropylène ignifuge selon l'une quelconque des revendications 6 à 9, dans laquelle l'agent anti-goutte (G) comprend au moins un agent anti-goutte à base de fluor choisi dans le groupe constitué de polytétrafluoroéthylène, fluorure de polyvinylidène, polyhexafluoropropylène, perfluorométhanesulfonate de sodium, perfluoro-n-butanesulfonate, perfluoro-t-butanesulfonate de potassium, perfluorooctanesulfonate de sodium et perfluoro-2-éthylhexanesulfonate de calcium, et l'agent anti-goutte (G) se présente sous la forme d'un mélange maître dispersé dans une résine à base de polypropylène.

11. Composition de résine de polypropylène ignifuge de l'une quelconque des revendications 6 à 10, dans laquelle le pigment (H) comprend au moins un pigment inorganique choisi dans le groupe constitué de noir de carbone, paillettes d'aluminium, poudre d'aluminium, feuille d'aluminium, poudre de zinc, poudre de bronze, mica perlé, blanc de titane, oxyde de zinc, sulfure de zinc, jaune de chrome, jaune de baryum, outremer, bleu de cobalt et vert de cobalt ; au moins un pigment organique choisi dans le groupe constitué de rouge de Watchung, rouge permanent, rouge de palladium, jaune de benzidine et vert de phtalocyanine ; ou un mélange de ceux-ci, et le pigment (H) se présente sous la forme d'un mélange maître dispersé dans une résine à base de polyéthylène de faible densité.

12. Composition de résine de polypropylène ignifuge de l'une quelconque des revendications 1 à 11, qui comprend en outre au moins un additif choisi dans le groupe constitué d'un neutralisant, un agent de glissement, un agent anti-bloquant, une charge, un stabilisateur de résistance aux intempéries, un agent antistatique, un lubrifiant, un agent de nucléation et un colorant.

13. Article en résine de polypropylène ignifuge, qui est moulé à partir de la composition de résine de polypropylène ignifuge selon l'une quelconque des revendications 1 à 12.

14. Article en résine de polypropylène ignifuge de la revendication 13, qui, sur la base d'une épaisseur de 1,5 mm, satisfait à la norme V0 lorsqu'il est mesuré conformément au procédé de test vertical UL94, ou
qui satisfait aux conditions de 1000 heures ou plus dans un test de libération ignifuge à une température de 85 °C et une humidité relative de 85 %.

15. Article en résine de polypropylène ignifuge de la revendication 13 ou 14, qui constitue une pièce d'appareil ménager ou une pièce d'automobile.
